# EUROPÄISCHE PATENTSCHRIFT

(11) **EP 1 098 335 B1**
(45) Veröffentlichungstag und Bekanntmachung des Hinweises auf die Patenterteilung: **12.07.2006**
(21) Anmeldenummer: 99121709.2
(22) Anmeldetag: 02.11.1999
(51) Int. Cl.: H01H 35/00, G01B 7/02, G01B 5/02, H02K 49/10

(54) **Kraftschlussdetektor mit Drehmomentschalter**
Force-fitting detector with torque switch
Capteur pour un couplage par friction utilisant un détecteur de seuil

(43) Veröffentlichungstag der Anmeldung: 09.05.2001
(73) Patentinhaber: Löffler, Hans-Peter, 64342 Seeheim-Jugenheim (DE)
(72) Erfinder: Löffler, Hans-Peter, 64342 Seeheim-Jugenheim (DE)
(74) Vertreter: Mierswa, Klaus

(56) Entgegenhaltungen:
- EP-A- 0 335 700
- DE-A- 3 246 246
- DE-U- 8 904 857
- US-A- 4 551 663
- US-A- 5 461 826

## Beschreibung

### Technisches Gebiet:

Die Erfindung betrifft einen elektrischen Sensor zur Erkennung eines mechanischen Kraftschlusses zur Umwandlung desselben in eine elektrisches Schaltsignal gemäß dem Oberbegriff des Anspruchs 1 sowie eine Apparatur ausgestattet mit einem derartigen Sensor gemäß dem Oberbegriff des Anspruchs 12.

### Stand der Technik:

In vielen Bereichen der Technik ist es notwendig, Gegenstände, wie Kugeln oder in der pharmazeutischen Industrie auch Tabletten oder Pillen, zu vermessen, insbesondere ihre Höhe, um die Einhaltung von vorgegebenen Herstellungsparametern sicher zu stellen. Dazu werden Apparaturen mit Spindelantrieben verwendet, welche bei der Ausübung einer bestimmten Kraft der Spindel auf den zu messenden Körper und damit aufgrund der Begrenzung der Bewegung ein mechanisches Schaltsignal zu erzeugen imstande sind, welches auch in ein elektrisches Signal umgewandelt werden kann.

### Technische Aufgabe:

Der Erfindung liegt die Aufgabe zugrunde, einen mit Verschleiß-, Ermüdungs- und Alterungseffekten nur sehr wenig behafteten, weitgehend wartungsfreien und vollständig schmiermittelfreien elektrischen Sensor zur Erkennung von mechanischem Kraftschluß, Berührung, bereitzustellen, wobei eine Auslenkung aus der Ruhelage an der Unterbrechung mindestens einer Strombrücke erkannt werden kann.

Erfindungsgemäß wird die Aufgabe gelöst durch einen elektrischen Sensor zur Erkennung eines mechanischen Kraftschlusses zur Umwandlung desselben in ein elektrisches Schaltsignal, umfassend zwei parallel übereinander angeordnete Platten, wobei an wenigstens einer der Platten eine Mehrzahl von Magnete mit elektrisch leitfähigen ersten Lauf-Lagerflächen und an der anderen Platte den ersten Lauf-Lagerflächen gegenüberstehend und durch die Magnetfelder angezogen ebenfalls elektrisch leitfähige zweite Lauf-Lagerflächen angeordnet sind und zwischen den ersten und zweiten Lauf-Lagerflächen sich frei beweglich elektrisch und magnetisch leitende Kugeln befinden, die von dem jeweiligen Magnetfeld des Magneten angezogen werden, welches bestrebt ist, die Kugeln in das Zentrum der magnetischen Kraftlinien zu rollen, die aus den Lauf-Lagerflächen aus- bzw. in dieselben eintreten und die Magnetfelder mit den zwischen den Lauf-Lagerflächen ein selbstzentrierendes Magnetlager ausbilden, und die beiden Platten parallel und senkrecht gegeneinander verschiebbar sind, wobei die Kugeln mit den jeweils zugeordneten ersten und zweiten Lauf-Lagerflächen mittels des mechanischen Kraftschlusses je eine Strombrücke bilden, und bei Vorliegen einer senkrecht wirkenden Kraftkomponente auf eine der Platten und dadurch bedingtes Abheben der einen Platte relativ zur anderen Platte aufgrund der Aufhebung des mechanischen Kraftschlusses und der damit verbundenen Unterbrechung der Berührung wenigstens in einer der Strombrücken ein elektrisches Schaltsignal auslösbar ist.

Weitere Ausgestaltungen der Erfindung sind in den Unteransprüchen gekennzeichnet. Eine besondere Ausgestaltung der Erfindung besteht darin, dass beide Platten von einem Gehäuse umgeben sind, wobei die untere Platte ortsfest in dem Gehäuse angeordnet oder Teil des Gehäuses ist und eine zentrische Bohrung sowie an ihrer Oberseite drei elektrisch leitende gegeneinander und gegen die untere Platte elektrisch isolierte elektrisch leitende untere Lauf-Lagerflächen und drei an der unteren Platte unterhalb der unteren Lauf-Lagerflächen angeordnete untere Magnete aufweist, wobei die obere Platte beweglich ist, welche an ihrer Unterseite drei den unteren Lauf-Lagerflächen gegenüberliegende elektrisch miteinander leitend verbundene und gegen die obere Platte elektrisch isolierte nach unten weisende obere Lauf-Lagerflächen und drei oberhalb der oberen Lauf-Lagerflächen angeordnete obere Magnete aufweist, wobei jeder der oberen Magnete so ausgerichtet ist, daß er den jeweils gegenüberliegenden Magneten der unteren Magnete anzieht, dass an der oberen Platte ferner ein rechtwinklig nach unten abstehender zentrischer zylindrischer Schaft angebracht ist, der berührungslos durch die Bohrung der unteren Platte hindurchragt und an der Unterseite der unteren Platte aus dem Gehäuse übersteht, wobei die Bewegung der beweglichen Platte parallel und senkrecht gegenüber der ortsfesten unteren Platte durch das Gehäuse begrenzt ist, und wobei ferner der Sensor Teil einer von einem Linearantrieb mit einem Elektromotor mit Positionssensor, Inkrementalgeber, oder einem Schrittmotor und Gewindespindel angetriebenen Apparatur zur Messung der Dicke oder Höhe eines Prüfkörpers ist und der Meßwert bei der Unterbrechung einer der Strombrücken und dadurch Auslösen eines Schaltsignals aus der Umdrehung des Schrittmotors mit Gewindespindel ermittelbar ist.

Die vorliegende Erfindung ermöglicht es, einen kompakten, nahezu verschleißfreien Sensor zur Erkennung von mechanischem Kraftschluß mit geringem Herstellungsaufwand und aus wenigen Bauteilen bereitzustellen, wobei eine Auslösung des Sensors anhand der Unterbrechung einer Strombrücke erkannt werden kann. Die Erfindung besitzt einen selbstzentrierenden und reibungsfreien Tastmechanismus zur Erkennung von mechanischem Kraftschluß, nämlich Berührung, der z.B. für die automatische Messung der Dicke und Höhe von Prüfkörpern vorteilhaft eingesetzt werden kann. Die beweglichen Teile des Sensors benötigen keine mechanische Führung wie auch die beweglichen Teile und deren Lagerung weder bei der mit einer seitlichen Auslenkung verbundenen Bewegung noch bei der Auslösung des Sensors einem Gleitreibungsvorgang ausgesetzt sind und nach der Auslenkung bzw. Auslösung von selbst in ihre Ruhelage zurückkehren und sich in dieser Ruhelage von selbst stabil, präzise und gleitreibungsfrei zentrieren.

Bei einem Sensor, bei dem die Rückstellkraft durch eine Feder bewirkt wird, wächst bei Auslösung die Rückstellkraft mit zunehmender Entfernung von der Ruhelage an. Im Gegensatz hierzu nimmt bei der Auslösung des erfindungsgemäßen Sensors die Rückstellkraft schlagartig stark ab, sobald die Haltekraft der Magnete überwunden ist, was von besonderem Vorteil ist, wenn ein großer Nachlauf erwünscht oder notwendig ist und die Rückstellkraft dennoch einen bestimmten Wert nicht übersteigen soll.

Wegen der selbstzentrierenden Rückstellung kann eine mechanische Führung des Tastmechanismus entfallen. Da aufgrund der Verwendung eines Magnetlagers keine Gleitreibung auftritt, erfolgt nur ein sehr geringer Verschleiß, und eine Schmierung des erfindungsgemäßen Sensors ist nicht erforderlich. Hierdurch ist zugleich auch die Gefahr von Störungen, die durch zwischen Kontaktflächen geratende Abriebteilchen oder Schmiermittel verursacht werden, reduziert.

Wegen der Verwendung eines selbstzentrierenden magnetischen Lagers kann die eine Platte durch eine parallel zur Platte wirkende Kraft gegenüber der anderen Platte verschoben werden. Durch eine solche seitliche Auslenkung wird keine der Strombrücken unterbrochen, d.h. der Sensor wird nicht ausgelöst. Nach jeder Auslösung und nach jeder seitlichen Auslenkung kehrt der Tastmechanismus selbständig in eine präzise definierte, stabile Ruhelage zurück. Der Sensor arbeitet prinzipbedingt stets und auch ungeachtet eines Abnutzungsgrades spielfrei.

Die Möglichkeit, den Sensor seitlich auszulenken, ohne ihn auszulösen, ist z.B. dann von Vorteil, wenn mit dem Sensor ein Prüfkörper abgetastet werden soll, der sich, etwa auf einem Förderband, relativ zum Sensor bewegt. Der Tastmechanismus des Sensors kann dem Prüfkörper während des Abtastens entlang eines bestimmten Weges folgen, so daß die Bewegung des Prüfkörpers nicht unterbrochen werden muß.

Die zur Auslösung des Sensors zu überwindende Haltekraft weist eine sehr gute Langzeitstabilität auf, da der erfindungsgemäße Sensor keine Teile enthält, die hinreichend großen Druck-, Zug- oder Scherspannungen ausgesetzt sind, um nennenswerte Materialermüdung nach sich ziehen zu können. Dies stellt einen erheblichen Vorteil z.B. gegenüber Sensoren mit federinduzierter Rückstellkraft dar. Nachjustierungen des Sensors bzw. der zu seiner Auslösung notwendigen Kraft können daher weitgehend entfallen.

Die Magnete und Körper, die durch ein Magnetfeld angezogen werden, können bei geeigneter elektrischer Beschaltung und bei geeigneter Formung ihrer Oberflächen selbst als Lauf-Lagerflächen fungieren, so daß die Lauf-Lagerflächen mit den Oberflächen der Magnete bzw. der Körper, die durch ein Magnetfeld angezogen werden, zusammenfallen. Gesonderte Lauf-Lagerflächen können in diesem Fall entfallen, was den Aufbau eines erfindungsgemäßen Sensors vereinfacht. In diesem Fall sind die Magnete bzw. Körper, die durch ein Magnetfeld angezogen werden, unmittelbar selbst von einem gewissen Abrieb betroffen.

Selbstverständlich können die Kugeln bei Bedarf, z.B. nach Erreichen eines bestimmten Abnutzungsgrades, sehr leicht und schnell ausgetauscht werden. Abgesehen von dem mit dem Abrollen der Kugeln auf den Lauf-Lagerflächen verbundenen Abnutzung, die einen sehr geringen Abrieb verursacht, arbeitet der Sensor völlig abnutzungsfrei.

### Kurzbeschreibung der Zeichnung, in der zeigen:

- Fig. 1: eine perspektivische Darstellung einer bevorzugten Ausführungsform eines erfindungsgemäßen Sensors von schräg unten,
- Fig. 2: eine Ansicht der oberen Platte von unten,
- Fig. 3: eine Ansicht der unteren Platte von oben,
- Fig. 4: eine Querschnittsansicht einer bevorzugten Ausführungsform eines erfindungsgemäßen Sensors mit Gehäuse entlang des in Fig. 2 und Fig. 3 eingezeichneten Schnittes A-A,
- Fig. 5: eine schematische Darstellung der elektrischen Beschaltung einer bevorzugten Ausführungsform eines erfindungsgemäßen Sensors,
- Fig. 6: eine schematische Darstellung der elektrischen Beschaltung einer anderen bevorzugten Ausführungsform eines erfindungsgemäßen Sensors und
- Fig. 7: ein Beispiel für die Anwendung eines erfindungsgemäßen Sensors in einer Apparatur mit Schrittmotor und Gewindespindel zur Messung der Dicke oder Höhe eines Prüfkörpers.

### Wege zur Ausführung der Erfindung:

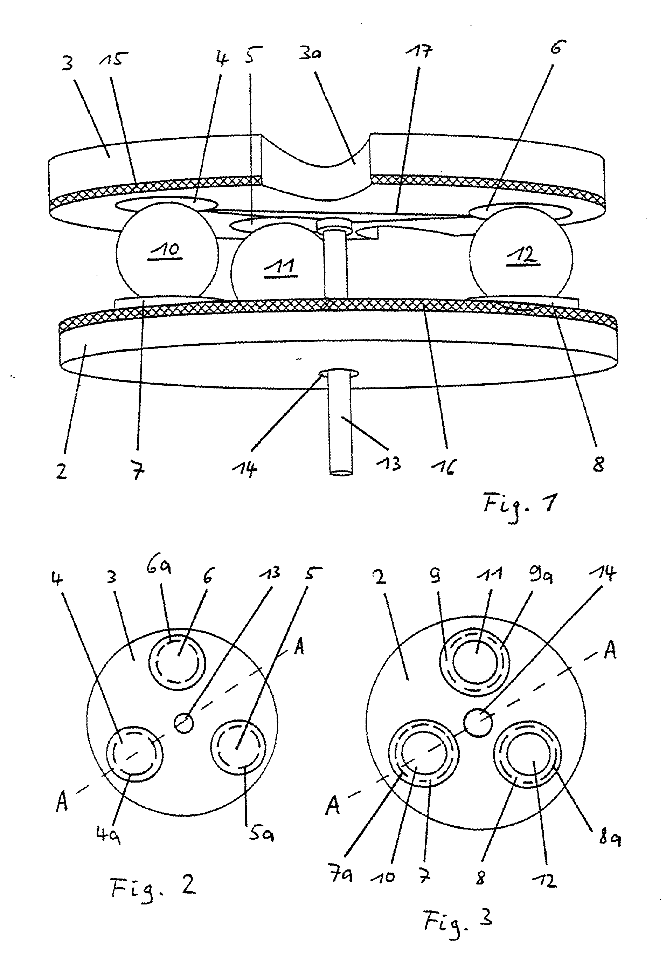

Der Aufbau einer bevorzugten Ausführungsform eines erfindungsgemäßen Sensors mit drei elektrisch leitenden Kugeln, drei Paaren von Lauf-Lagerflächen und drei Magnetpaaren ist in den Fig. 1 bis Fig. 3 dargestellt. In eine scheibenförmige obere Platte 3, die bei einer Auslösung oder seitlichen Auslenkung des Sensors mitbewegt wird, sind drei obere Magnete 4a, 5a, 6a, die vorzugsweise ein gleichseitiges Dreieck bilden, eingelassen. An der Unterseite der oberen Platte 3 ist eine aus isolierendem Material bestehende Platine 15 angebracht, die an ihrer Unterseite im Bereich der Magnete 4a, 5a, 6a mit drei elektrisch leitenden oberen Lauf-Lagerflächen 4, 5, 6 versehen ist, die mittels einer Leiterbahn 17 untereinander elektrisch verbunden sind und ebenfalls ein gleichseitiges Dreieck bilden (Fig. 2).

In einer bevorzugten Ausführungsform sind in die scheibenförmige untere Platte 2, die bei einer Auslösung oder seitlichen Auslenkung des Sensors ortsfest bleibt, drei untere Magnete 7a, 8a, 9a so eingelassen, daß ihre Positionen mit denjenigen der in die obere Platte 2 eingelassenen oberen Magnete 4a, 5a, 6a deckungsgleich sind und daher ebenfalls ein gleichseitiges Dreieck bilden. An der Oberseite der unteren Platte 2 ist eine aus isolierendem Material bestehende Platine 16 angebracht, die an ihrer Oberseite im Bereich der unteren Magnete 7a, 8a, 9a mit drei elektrisch leitenden untere Lauf-Lagerflächen 7, 8, 9 versehen ist. Die unteren Lauf-Lagerflächen 7, 8, 9 sind vorzugsweise gegen die untere Platte 2 und gegeneinander elektrisch isoliert.

In einer anderen Ausführungsform sind die oberen bzw. unteren Magnete 4a, 5a, 6a, 7a, 8a, 9a nicht in die obere Platte 3 bzw. in die untere Platte 2 eingelassen, sondern an deren Oberfläche befestigt.

In einer weiteren Ausführungsform der Erfindung sind entweder die oberen Magnete 4a, 5a, 6a oder die unteren Magnete 7a, 8a, 9a durch Körper ersetzt, die durch ein Magnetfeld angezogen werden, wie z.B. Eisenscheiben.

In einer weiteren Ausführungsform ist die obere Platte 3 aus einem elektrisch leitenden Material hergestellt und mit den Lauf-Lagerflächen 4, 5, 6 elektrisch verbunden, so daß die obere Platte 3 zur elektrischen Verbindung der Lauf-Lagerflächen 4, 5, 6 untereinander dient.

Die Orientierung der Magnete ist so gewählt, daß sich die einander gegenüberliegenden Magnete jeweils paarweise gegenseitig anziehen. Die Orientierung der oberen und unteren Lauf-Lagerflächen ist so gewählt, daß jede der oberen Lauf-Lagerflächen 4, 5, 6 auf die ihr gegenüberliegende untere Lauf-Lagerfläche 7, 8, 9 weist und umgekehrt.

Im Zentrum der Unterseite der oberen Platte 3 ist ein rechtwinklig zur Plattenebene abstehender Schaft 13 befestigt, der zusammen mit der oberen Platte 3 den Tastmechanismus des Sensors bildet und dazu dient, Auslöse- und Auslenkungskräfte, die auf die Spitze des Schaftes 13 einwirken, auf die obere Platte 3 zu übertragen. Zur Durchführung des Schaftes 13 durch die untere Platte 2 weist letztere eine Bohrung 14 auf. Die Bohrung 14 hat nicht die Aufgabe, als mechanische Führung für den Schaft 13 zu dienen, und weist daher vorzugsweise einen Durchmesser auf, der deutlich größer ist als der Durchmesser des Schaftes 13, um eine berührungslose und damit reibungsfreie Durchführung des Schaftes 13 zu gewährleisten.

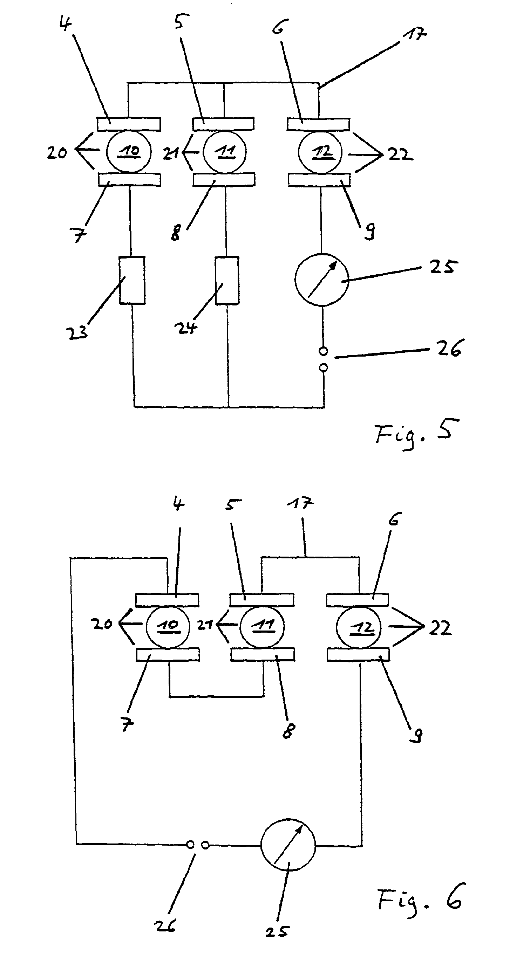

Zwischen jeder oberen Lauf-Lagerfläche 4, 5, 6 und der ihr jeweils gegenüberliegenden unteren Lauf-Lagerfläche 7, 8, 9 befindet sich erfindungsgemäß eine elektrisch leitende Kugel 10, 11, 12, die aus einem Material besteht, das von einem Magnetfeld angezogen wird, so daß ein selbstzentrierendes magnetisches 3-Punkt-Lager vorliegt. Aufgrund der elektrischen Leitfähigkeit der Kugeln 10, 11, 12 sind die einander paarweise gegenüberliegenden Lauf-Lagerflächen 4 und 7, 5 und 8 sowie 6 und 9 bei Kraftschluß, d.h. in Ruhelage des Sensors, erfindungsgemäß jeweils elektrisch miteinander verbunden, so daß durch die Lauf-Lagerfläche 4, die Kugel 10 und die Lauf-Lagerfläche 7 eine erste Strombrücke 20, durch die Lauf-Lagerfläche 5, die Kugel 11 und die Lauf-Lagerfläche 8 eine zweite Strombrücke 21 und durch die Lauf-Lagerfläche 6, die Kugel 12 und die Lauf-Lagerfläche 9 eine dritte Strombrücke 22 gebildet wird (Fig. 5, Fig. 6). Die Magnete sind in Fig. 5 und Fig. 6 aus Gründen der Übersichtlichkeit nicht gezeigt.

In einer bevorzugten Ausführungsform sind die Lauf-Lagerflächen 4, 5, 6, 7, 8, 9 und die Kugeln 10, 11, 12 zur Verbesserung des elektrischen Kontaktes mit Gold beschichtet.

In einer anderen, vereinfachten Ausführungsform sind keine separaten Lauf-Lagerflächen 4, 5, 6, 7, 8, 9 vorhanden, und die Oberflächen der Magnete 4a, 5a, 6a, 7a, 8a, 9a sind so geformt, daß sie selbst als Lauf-Lagerflächen fungieren, so daß die Oberflächen der Magnete mit den Lauf-Lagerflächen identisch sind. In dieser vereinfachten Ausführungsform müssen die Magnete elektrisch beschaltet sein, und die Magnete sind bei Betrieb des Sensors unmittelbar selbst von einem gewissen Abrieb betroffen.

In einer anderen, aufwendigeren Ausführungsform sind zwischen den Kugeln und den an ihnen anliegenden Lauf-Lagerflächen zusätzliche elektrisch leitende Laufflächen angeordnet. Ein Vorteil bei der Verwendung von zusätzlichen Laufflächen besteht darin, daß durch geeignete Wahl des Materials und der Stärke der zusätzlichen Laufflächen die zur Auslösung erforderliche Kraft sehr leicht verändert werden kann, ohne die Magnete auszutauschen oder sonstige Veränderungen vorzunehmen. Ein weiterer Vorteil einer solchen Anordnung besteht darin, daß durch die Verwendung von zusätzlichen Laufflächen aus weichem bzw. stoßabsorbierendem Material die Steifigkeit des Magnetlagers reduziert bzw. seine Dämpfung verbessert werden können, z.B. um die Reaktion des Sensors auf Stöße, Schwingungen oder Vibrationen zu verbessern.

Bei Einsatz von zusätzlichen Laufflächen bleiben die Lauf-Lagerflächen vollständig frei von Abrieb, was einen weiterer Vorteil bei der Verwendung von zusätzlichen Laufflächen darstellt, da diese bei Abnutzung leichter und kostengünstiger ausgewechselt werden können als die Lauf-Lagerflächen.

Bei Einwirkung einer die Haltekraft der Magnete übersteigenden, der Anziehungskraft der Magnete entgegengerichteten Kraft auf die Spitze des Schaftes 13 wird der Sensor ausgelöst. Der Kraftschluß wird an einer oder mehreren der Kugeln 10, 11, 12 aufgehoben.

Da in der Regel die Richtung der Kraft auf den Tastmechanismus nicht parallel zur Achse des Schaftes 13 verläuft, wird durch das Abheben einer oder mehrerer Kugeln eine Verkantung des Tastmechanismus gegenüber der unteren Platte 2 auftreten.

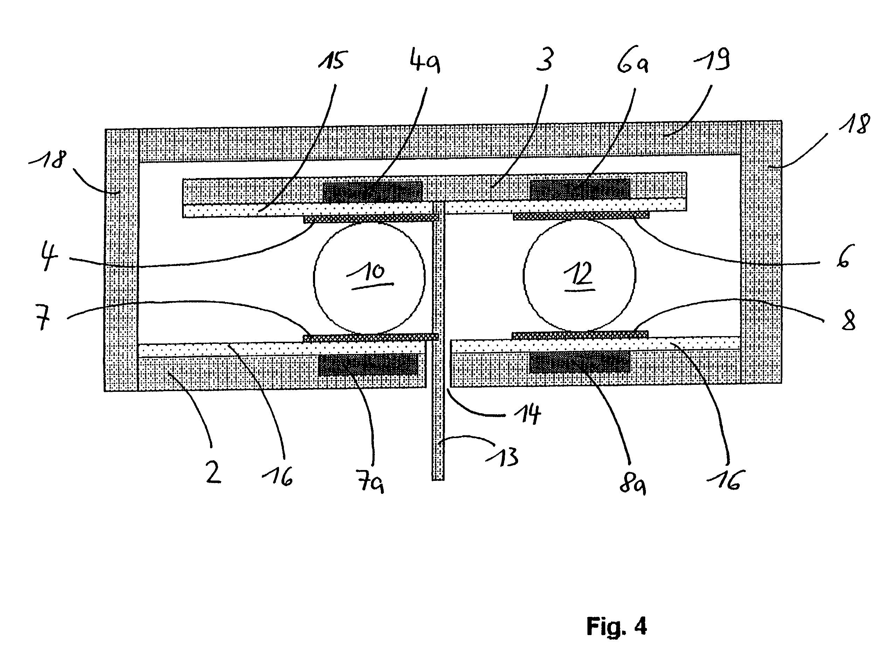

Fig. 4 zeigt einen Querschnitt durch eine bevorzugte Ausführungsform eines erfindungsgemäßen Sensors entlang des in Fig. 2 und Fig. 3 eingezeichneten Schnittes A-A. In der in Fig. 4 skizzierten bevorzugten Ausführungsform ist der Sensor mit einer an der unteren Platte 2 befestigten seitlichen zylindrischen Wandung 18 und einem Deckel 19 versehen, so daß der horizontale und der vertikale Spielraum der oberen Platte 3 und auch der Winkel der Verkantung begrenzt sind. Gleichzeitig wird durch eine solche Anordnung ein Gehäuse für das Magnetlager gebildet, das z.B. das Eindringen von Verschmutzungen vermindert. Der Durchmesser der oberen Platte 3 wird in dieser Ausführungsform zweckmäßigerweise kleiner gewählt als derjenige der unteren Platte 2, um eine gewisse seitliche Auslenkung zuzulassen. Der Durchmesser der Bohrung 14 ist in dieser Ausführungsform so groß gewählt, daß selbst bei maximaler Verkantung keine Berührung zwischen dem Schaft 13 und der unteren Platte 2 erfolgen kann, um Verschleiß durch Reibung zu vermeiden.

Der Deckel 19 ist durch mindestens eine senkrecht durch das Innere des Gehäuses verlaufende (nicht gezeigte) Verstrebung, die z.B. eine Zylinderschraube zur Aufbringung einer Zugkraft umfassen kann, mit der unteren Platte 2 verbunden, um das Gehäuse zusammenzuhalten. Die obere Platte 3 weist in dieser Ausführungsform eine entsprechende Aussparung 3a (Fig. l) auf, durch die die Verstrebung verläuft. Die durch das Innere des Gehäuses verlaufende Verstrebung dient gleichzeitig als Sperre gegen ein Verdrehen der oberen Platte 3 um ihre Achse gegenüber der unteren Platte 2 um mehr als einen vorgegebenen Winkel.

Bei Auslösung werden die Kugeln 10, 11, 12 entweder den an der oberen Platte 3 angebrachten oberen Lauf-Lagerflächen 4, 5, 6 der Auslenkung folgen und zusammen mit diesen angehoben, oder sie bleiben auf den an der unteren Platte 2 angebrachten unteren Lauf-Lagerflächen 7, 8, 9 liegen, je nachdem, ob die Haltekraft des jeweils oberen oder unteren Magneten überwiegt. Da in jedem Fall der Kraftschluß und damit die betreffende Strombrücke unterbrochen wird, ist es für die Funktion des Sensors unerheblich, welche der beiden Möglichkeiten jeweils eintritt.

Nun wird auf Fig. 5 Bezug genommen, die einen Schaltplan für eine bevorzugte Ausführungsform der Erfindung zeigt. Die oberen Lauf-Lagerflächen sind 4, 5, 6 durch einen elektrischen Leiter 17 miteinander verbunden. Die unteren Lauf-Lagerflächen 7, 8 sind jeweils über einen elektrischen Widerstand 23, 24, die vorzugsweise unterschiedliche Ohmwerte aufweisen, parallel geschaltet und an den einen Pol einer Spannungquelle 26 gelegt. Der andere Pol der Spannungsquelle ist über ein Strommeßgerät 25 mit der unteren Lauf-Lagerfläche 9 verbunden.

Wenn alle Strombrücken 20, 21, 22 geschlossen sind, fließt nun ein Strom I₀, der sich dadurch ergibt, daß der Widerstand 23 und die Strombrücke 20 vom Strom I₁ und der Widerstand 24 und die Strombrücke 21 parallel dazu vom Strom I₂durchflossen werden, so daß I₀ = I₁ + I₂. Sobald durch Auslenkung des Sensors die Strombrücke 22 unterbrochen wird, kommt der Stromfluß vollständig zum Erliegen, da der gesamte Stromkreis unterbrochen ist. Wird hingegen durch die Auslenkung des Sensors nicht die Strombrücke 22, sondern die Strombrücke 20 unterbrochen, so sinkt der Strom von dem Wert I₀ auf den Wert I₂, da durch den Widerstand 23 und die Strombrücke 20 kein Stromfluß mehr erfolgen kann. In analoger Weise sinkt der Strom von dem Wert I₀ auf den Wert I₁, wenn allein die Strombrücke 21 unterbrochen ist, da in diesem Fall kein Stromfluß mehr durch den Widerstand 24 und die Strombrücke 21 erfolgen kann.

Wenn die Widerstände 23, 24 unterschiedliche Ohmwerte aufweisen, sind die Ströme I₁ und I₂ unterschiedlich groß. Dies bedeutet, daß bei Auslenkung des Sensors mit Hilfe einer Strommessung eindeutig festgestellt werden kann, welche der Strombrücken 20, 21, 22 unterbrochen ist. Diese Unterscheidungsfähigkeit des Sensors kann z.B. bei der Abtastung von Prüfkörpern, wie Pillen oder Tabletten, mit geneigter Oberfläche von Vorteil sein, etwa dann, wenn die Orientierung der Oberflächenneigung von Interesse ist.

Fig. 6 zeigt einen Schaltplan für eine andere Ausführungsform der Erfindung, bei der die Strombrücken 20, 21, 22 in Serie geschaltet sind. Solange keine Auslösung des Sensors vorliegt, sind alle Strombrücken 20, 21, 22 geschlossen und damit der in Fig. 5 gezeigte, durch eine Stromquelle 26 gespeiste Stromkreis geschlossen. In diesem Fall wird ein in dem Stromkreis zwischengeschaltetes elektrisches Meßinstrument 25 einen Stromfluß anzeigen. Wie oben bereits erwähnt wurde, wird der Kraftschluß bei Einwirkung einer Druckkraft auf die Spitze des Schaftes 13 zunächst nur an einer der Kugeln 10, 11, 12 aufgehoben, während er bei den anderen Kugeln bestehen bleibt. Dies bedeutet, daß zunächst nur eine der Strombrücken 20, 21, 22 unterbrochen wird. Hierdurch kommt der Stromfluß zum Erliegen, wodurch die Aufhebung des Kraftschlusses mit Hilfe des Meßinstrumentes 25 erkannt werden kann. In dieser Ausführungsform der Erfindung ist es gleichgültig, welche der Strombrücken 20, 21, 22 unterbrochen wird, und es ist des weiteren gleichgültig, ob eine oder mehrere der Strombrücken 20, 21, 22 unterbrochen werden.

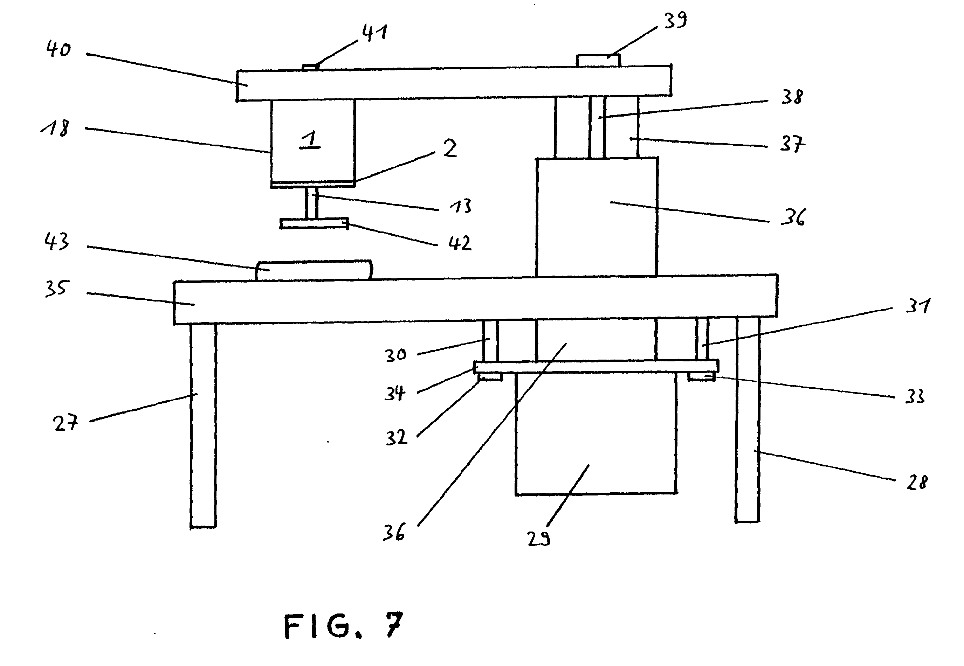

Fig. 7 zeigt ein Beispiel für eine Anwendung eines Sensors in einer Apparatur zur Messung der Dicke oder Höhe von Prüfkörpern im Querschnitt. Unter einem auf Stützen 27, 28 ruhenden Meßtisch 35 ist mittels Abstandshülsen 30, 31, Zylinderschrauben 32, 33 und einer Montageplatte 34 ein Schrittmotor 29 mit Gewindespindel (nicht gezeigt) befestigt. Je nach Umdrehungsrichtung des Schrittmotors 29 senkt oder hebt die Gewindespindel mit Hilfe eines Hebe- und Senkmechanismus 36, 37 eine auf diesem mittels einer Klemmvorrichtung 39 angebrachten Traverse 40. An der Traverse 40 ist mittels einer weiteren Klemmvorrichtung 41 der Sensor 1 befestigt. Das freie Ende des Schaftes 13 ist mittels eines (nicht gezeigten) klemmbaren Gelenklagers mit Horizontalanschlag mit einem Meßfuß 42 versehen, so daß dieser schwenkbar ist und insbesondere planparallel zur Oberfläche des Meßtisches 35 ausgerichtet werden kann. Ein Prüfkörper 43, dessen Dicke oder Höhe gemessen werden soll, ist unterhalb des Sensors auf dem Meßtisch positioniert. Zur Messung wird die Traverse einschließlich des an ihr befestigten Sensors 1 so weit abgesenkt, bis eine der Strombrücken 20, 21, 22 in dem Sensor 1 unterbrochen ist. Die Dicke bzw. Höhe des Prüfkörpers ergibt sich aus der Zahl der Umdrehungen des Schrittmotors 29 und der Steigung der Gewindespindel.

In einer Ausführungsform der Erfindung (nicht gezeigt) ist zum Zweck der mechanischen Verbindung des Sensors mit der Traverse 40 an der Traverse 40 ein lösbares und feststellbares Kalottenlager angebracht, mit dem das Gehäuse 1 des Sensors über eine vertikale Verbindungsstange verbunden ist. Die Verbindungsstange kann innerhalb des Kalottenlagers gelöst und axial verschoben werden, so daß der Abstand zwischen Sensor und Traverse 40 verändert werden kann. Eine zwischen dem oberen Ende der Verbindungsstange und dem Kalottenlager gespannte Schraubenfeder dient dazu, den Sensor bei gelöstem Kalottenlager vom Meßtisch 35 wegzuziehen. Der Meßfuß 42 kann somit gegen die Federkraft auf den Meßtisch aufgedrückt werden und mittels des klemmbaren Kalottenlagers 41 in der Traverse 40 planparallel zum Meßtisch 35 ausgerichtet und in der Höhe justiert werden. Das klemmbare Kalottenlager in der Traverse ermöglicht einerseits eine axiale Verschiebung und andererseits eine Neigung des Sensors. Damit kann der Bediener mit einer Hand den Meßfuß auf den Meßtisch planparallel entgegen der Federkraft aufdrücken und mit der anderen Hand das Kalottenlager festsetzen. Dies hat den Vorteil, dass beim Festziehen des Lagers der Sensor nicht wieder verstellt wird. Alternativ ist auch ein Gelenklager im Meßfuß möglich.

Bei Anwendung eines erfindungsgemäßen Sensors in einer Apparatur zur Messung der Dicke oder Höhe von Prüfkörpern, wie in Fig. 7 gezeigt, ist der Bremsweg des in Hebe- und Senkmechanismus weitgehend unkritisch, da der Nachlaufweg des Sensors ohne nachteilige Wirkung sehr groß gehalten werden kann (vgl. Abb. 4). Dieser Sachverhalt kann den Konstruktionsaufwand für eine Meßapparatur, wie sie in Fig. 7 dargestellt ist, deutlich vereinfachen und stellt somit einen weiteren Vorteil der Erfindung dar.

Der Sensor ist insbesondere zur Messung der Dicke von Prüfkörpern, wie Kugeln oder Tabletten oder Pillen, gewerblich anwendbar. Seine Nützlichkeit liegt insbesondere in der geringen Ansprechkraft zu seiner Auslösung, wie nur wenige Newton, zum Beispiel schon bei 2 bis 3 Newton, und darin, dass er ein selbstzentrierendes Magnetlager darstellt und deshalb sich der bewegende Teil des Sensors immer wieder in eine Ruhelage zurückbewegt und sich dort automatisch zentriert.

### Bezugszeichenliste:

- 1: Gehäuse
- 2: Untere Platte
- 3: Obere Platte
- 3a: Aussparung
- 4: obere Lauf-Lagerfläche
- 4a: oberer Magnet
- 5: obere Lauf-Lagerfläche
- 5a: oberer Magnet
- 6: obere Lauf-Lagerfläche
- 6a: oberer Magnet
- 7: untere Lauf-Lagerfläche
- 7a: unterer Magnet
- 8: untere Lauf-Lagerfläche
- 8a: unterer Magnet
- 9: untere Lauf-Lagerfläche
- 9a: unterer Magnet
- 10: Elektrisch leitende Kugel
- 11: Elektrisch leitende Kugel
- 12: Elektrisch und magnetisch leitende Kugel
- 13: Schaft
- 14: Bohrung
- 15: Platine
- 16: Platine
- 17: Elektrische Leitung oder Leiterbahn
- 18: Zylindrische Wandung
- 19: Deckel
- 20: Strombrücke
- 21: Strombrücke
- 22: Strombrücke
- 23: Elektrischer Widerstand
- 24: Elektrischer Widerstand
- 25: Strommeßgerät
- 26: Elektrische Spannungsquelle
- 27: Stütze
- 28: Stütze
- 29: Linearantrieb mit Elektromotor mit Postionsgeber (Inkrementalgeber) oder Schrittmotor und Gewindespindel
- 30: Hülse
- 31: Hülse
- 32: Zylinderschraube
- 33: Zylinderschraube
- 34: Montageplatte
- 35: Meßtisch
- 36: Äußerer Teil des Hebe- und Senkmechanismus
- 37: Innerer Teil des Hebe- und Senkmechanismus
- 38: Nut
- 39: Klemmvorrichtung
- 40: Traverse
- 41: Klemmvorrichtung, Kalottenlager
- 42: Mittels Gelenklager schwenkbarer Meßfuß
- 43: Prüfkörper

## Patentansprüche

1. Elektrischer Sensor zur Erkennung eines mechanischen Kraftschlusses zur Umwandlung desselben in ein elektrisches Schaltsignal, umfassend zwei parallel übereinander angeordnete Platten (2,3), wobei an wenigstens einer der Platten (2,3) eine Mehrzahl von Magnete (4a,5a,6a,7a,8a,9a) mit elektrisch leitfähigen ersten Lauf-Lagerflächen (4,5,6,7,8,9) und an der anderen Platte (2,3) den ersten Lauf-Lagerflächen (4,5,6,7,8,9) gegenüberstehend und durch die Magnetfelder angezogen ebenfalls elektrisch leitfähige zweite Lauf-Lagerflächen (4,5,6,7,8,9) angeordnet sind und zwischen den ersten und zweiten Lauf-Lagerflächen (4,5,6,7,8,9) sich frei beweglich elektrisch und magnetisch leitende Kugeln (10,11,12) befinden, die von dem jeweiligen Magnetfeld des Magneten (4a,5a,6a,7a,8a,9a) angezogen werden, welches bestrebt ist, die Kugeln (10,11,12) in das Zentrum der magnetischen Kraftlinien zu rollen, die aus den Lauf-Lagerflächen (4,5,6,7,8,9) aus- bzw. in dieselben eintreten und die Magnetfelder mit den (10,11,12) zwischen den Lauf-Lagerflächen (4,5,6,7,8,9) ein selbstzentrierendes Magnetlager ausbilden, und die beiden Platten parallel und senkrecht gegeneinander verschiebbar sind, wobei die Kugeln (10,11,12) mit den jeweils zugeordneten ersten und zweiten Lauf-Lagerflächen (4,5,6,7,8,9) mittels des mechanischen Kraftschlusses je eine Strombrücke bilden, und bei Vorliegen einer senkrecht wirkenden Kraftkomponente auf eine der Platten (2,3) und **dadurch** bedingtes Abheben der einen Platte (2,3) relativ zur anderen Platte (2,3) aufgrund der Aufhebung des mechanischen Kraftschlusses und der damit verbundenen Unterbrechung der Berührung wenigstens in einer der Strombrücken ein elektrisches Schaltsignal auslösbar ist.

2. Sensor nach Anspruch 1, **dadurch gekennzeichnet,**
**daß** die ersten Lauf-Lagerflächen (4,5,6,7,8,9) die Oberflächen der ersten Magnete (4a,5a,6a,7a,8a,9a) sind.

3. Sensor nach Anspruch 1, **dadurch gekennzeichnet,**
**daß** die zweiten Lauf-Lagerflächen (4,5,6,7,8,9) durch die Oberflächen von zweiten Magneten (4a,5a,6a,7a,8a,9a) gebildet sind, wobei sich die ersten und zweiten Magnete gegenüberstehen.

4. Sensor nach Anspruch 1, **dadurch gekennzeichnet,**
**daß** die Meßeinrichtung zur Feststellung des Kraftschlusses eine Einrichtung zur Messung einer elektrischen Kapazität oder einer Induktivität oder eine Einrichtung zur Messung der magnetischen Feldstärke mittels eines Hall-Sensors ist.

5. Sensor nach Anspruch 1, **dadurch gekennzeichnet,**
**daß** die Magnete (4a,5a,6a,7a,8a,9a) Permanentmagnete oder Elektromagnete sind.

6. Sensor nach Anspruch 1, **dadurch gekennzeichnet,**
**daß** die Relativbewegungen der beiden Platten (2, 3) gegeneinander in allen drei Raumrichtungen sowie die Verkantung der beiden Platten (2,3) gegeneinander durch ein an einer der Platten (2, 3) befestigtes Gehäuse (18, 19) begrenzt sind.

7. Sensor nach Anspruch 1, **dadurch gekennzeichnet,**
**daß** die Drehbewegungen der beiden Platten (2, 3) gegeneinander um die Plattenachse durch eine an einer der Platten (2, 3) befestigte Strebe, die in eine Aussparung (3a) der anderen der Platten (2, 3) hineingreift, begrenzt sind.

8. Sensor nach Anspruch 1, **dadurch gekennzeichnet,**
**daß** die ersten Lauf-Lagerflächen (4,5,6,7,8,9) oder die zweiten Lauf-Lagerflächen (4,5,6,7,8,9) untereinander elektrisch verbunden sind und daß mindestens zwei der Strombrücken (20,21,22) mit je einem elektrischen Widerstand (23,24) oder einem Kondensator oder mit je einer Induktivität in Serie geschaltet sind.

9. Sensor nach Anspruch 1 und 2, **dadurch gekennzeichnet,**
**daß** die Strombrücken (20,21,22) in Serie geschaltet sind.

10. Sensor nach Anspruch 1, **dadurch gekennzeichnet,**
**daß** der Sensor Teil einer Apparatur zur Messung der Dicke oder Höhe eines Prüfkörpers (43) ist, der auf einem Meßtisch (35) positioniert ist.

11. Sensor nach Anspruch 1, **dadurch gekennzeichnet,**
**dass** beide Platten (2,3) von einem Gehäuse (18,19) umgeben sind, wobei die untere Platte (2) ortsfest in dem Gehäuse (18,19) angeordnet oder Teil des Gehäuses (18,19) ist und eine zentrische Bohrung (14) sowie an ihrer Oberseite drei elektrisch leitende gegeneinander und gegen die untere Platte (2) elektrisch isolierte elektrisch leitende untere Lauf-Lagerflächen (7, 8, 9) und drei an der unteren Platte (2) unterhalb der unteren Lauf-Lagerflächen (7, 8, 9) angeordnete untere Magnete (7a, 8a, 9a) aufweist, wobei die obere Platte (3) beweglich ist, welche an ihrer Unterseite drei den unteren Lauf-Lagerflächen (7, 8, 9) gegenüberliegende elektrisch miteinander leitend verbundene und gegen die obere Platte (3) elektrisch isolierte nach unten weisende obere Lauf-Lagerflächen (4, 5, 6) und drei oberhalb der oberen Lauf-Lagerflächen (4, 5, 6) angeordnete obere Magnete (4a, 5a, 6a) aufweist, wobei jeder der oberen Magnete (4, 5, 6) so ausgerichtet ist, daß er den jeweils gegenüberliegenden Magneten der unteren Magnete (7a, 8a, 9a) anzieht, dass an der oberen Platte (3) ferner ein rechtwinklig nach unten abstehender zentrischer zylindrischer Schaft (13) angebracht ist, der berührungslos durch die Bohrung (14) der unteren Platte (2) hindurchragt und an der Unterseite der unteren Platte (2) aus dem Gehäuse (18,19) übersteht, wobei die Bewegung der beweglichen Platte (3) parallel und senkrecht gegenüber der ortsfesten unteren Platte (2) durch das Gehäuse (18,19) begrenzt ist, und wobei ferner der Sensor Teil einer von einem Linearantrieb (29) mit einem Elektromotor mit Positionssensor (Inkrementalgeber) oder einem Schrittmotor und Gewindespindel angetriebenen Apparatur zur Messung der Dicke oder Höhe eines Prüfkörpers (43) ist und der Meßwert bei der Unterbrechung einer der Strombrücken (20, 21, 22) und **dadurch** Auslösen eines Schaltsignals aus der Umdrehung des Schrittmotors mit Gewindespindel ermittelbar ist.

12. Apparatur zur Messung der Dicke oder Höhe eines Prüfkörpers (43), wie Tabletten oder Pillen, mit einem Meßtisch (35) und einem höhenverstellbaren Schaft (13), **dadurch gekennzeichnet, daß** an dem dem Meßtisch zugewandten Ende des Schaftes (13) ein Sensor gemäß Anspruch 1 oder 11 positioniert ist.

13. Apparatur nach Anspruch 12, **dadurch gekennzeichnet, daß** der Sensor Teil einer von einem Linearantrieb (29) mit einem Elektromotor mit Positionssensor (Inkrementalgeber) oder einem Schrittmotor und Gewindespindel angetriebenen Apparatur zur Messung der Dicke oder Höhe des Prüfkörpers (43) ist, wobei der Meßwert bei der Unterbrechung einer der Strombrücken (20, 21, 22) und **dadurch** Auslösen eines Schaltsignals aus der Umdrehung des Schrittmotors mit Gewindespindel ermittelt wird.

14. Apparatur nach Anspruch 12 oder 13, **dadurch gekennzeichnet, daß** der Schaft (13) an seinem freien Ende einen Meßfuß (42) aufweist, der mittels eines Gelenklagers schwenkbar an dem Schaft (13) angebracht ist, mittels dem er planparallel zu dem Meßtisch (35) ausgerichtet werden kann.

15. Apparatur nach Anspruch 13 oder 14, **dadurch gekennzeichnet, daß** der Sensor mit der Traverse (40) mittels eines feststellbaren, im losen Zusand schwenkbaren und in der Höhe verstellbaren Lagers verbunden ist, durch das der Sensor im losen Zustand mittels Federkraft in Richtung Traverse gezogen wird.

## Claims

1. An electric sensor for detecting a mechanical frictional connection in order to convert it into an electric switching signal, comprising two plates (2, 3) arranged in parallel one above the other, whereby a plurality of magnets (4a, 5a, 6a, 7a, 8a, 9a) having electrically conductive first running-bearing surfaces (4, 5, 6, 7, 8, 9) are arranged on at least one of the plates (2, 3) and, opposite from the first running-bearing surfaces (4, 5, 6, 7, 8, 9) and attracted by the magnetic fields, likewise electrically conductive second running-bearing surfaces (4, 5, 6, 7, 8, 9) are arranged on the other plate (2, 3), and freely movable, electrically and magnetically conductive balls (10, 11, 12) are located between the first and second running-bearing surfaces (4, 5, 6, 7, 8, 9), said balls (10, 11, 12) being attracted by the individual magnetic field of the magnet (4a, 5a, 6a, 7a, 8a, 9a) that strives to roll the balls (10, 11, 12) into the center of the magnetic force lines that either come out of or go into the running-bearing surfaces (4, 5, 6, 7, 8, 9), and the magnetic fields form a self-centering magnetic bearing together with the balls (10, 11, 12) between the running-bearing surfaces (4, 5, 6, 7, 8, 9), and the two plates can be moved in parallel and perpendicular relative to each other, whereby the balls (10, 11, 12) each form a current bridge together with each of the associated first and second running-bearing surfaces (4, 5, 6, 7, 8, 9) by means of the mechanical frictional connection and an electric switching signal can be triggered if a force component acting perpendicularly on one of the plates (2, 3) is present, thereby lifting the one plate (2, 3) relative to the other plate (2, 3) due to the elimination of the mechanical frictional connection and the thus associated interruption of the contact in at least one of the current bridges.

2. The sensor according to Claim 1, **characterized in that**
the first running-bearing surfaces (4, 5, 6, 7, 8, 9) are the surfaces of the first magnets (4a, 5a, 6a, 7a, 8a, 9a).

3. The sensor according to Claim 1, **characterized in that**
the second running-bearing surfaces (4, 5, 6, 7, 8, 9) are formed by the surfaces of second magnets (4a, 5a, 6a, 7a, 8a, 9a), whereby the first and the second magnets are opposite from each other.

4. The sensor according to Claim 1, **characterized in that**
the measuring device for determining the frictional connection is a device for measuring an electric capacitance or an inductance or else it is a device for measuring the magnetic field strength by means of a Hall sensor.

5. The sensor according to Claim 1, **characterized in that**
the magnets (4a, 5a, 6a, 7a, 8a, 9a) are permanent magnets or electromagnets.

6. The sensor according to Claim 1, **characterized in that**
the relative movements of the two plates (2, 3) relative to each other are limited in all three spatial directions and the canting of the two plates (2, 3) relative to each other is limited by a housing (18, 19) attached to one of the plates (2, 3).

7. The sensor according to Claim 1, **characterized in that**
the rotating movements of the two plates (2, 3) relative to each other around the plate axis are limited by a strut attached to one of the plates (2, 3), said strut engaging into a recess (3a) of the other plate (2, 3).

8. The sensor according to Claim 1, **characterized in that**
the first running-bearing surfaces (4, 5, 6, 7, 8, 9) or the second running-bearing surfaces (4, 5, 6, 7, 8, 9) are electrically connected to each other and **in that** at least two of the current bridges (20, 21, 22) are each connected in series with an electric resistor (23, 24) or a capacitor or else with an inductor.

9. The sensor according to Claims 1 and 2, **characterized in that**
the current bridges (20, 21, 22) are connected in series.

10. The sensor according to Claim 1, **characterized in that**
the sensor is part of an apparatus for measuring the thickness or height of a test specimen (43) that is positioned on a measuring table (35).

11. The sensor according to Claim 1, **characterized in that**
the two plates (2, 3) are surrounded by a housing (18, 19), whereby the lower plate (2) is arranged stationarily in the housing (18, 19) or else it is part of the housing (18, 19) and it has a central bore (14) as well as, on its top, three lower running-bearing surfaces (7, 8, 9) that are electrically conductive relative to each other and electrically insulated relative to the lower plate (2) as well as three lower magnets (7a, 8a, 9a) arranged on the lower plate (2) below the lower running-bearing surfaces (7, 8, 9), whereby the upper plate (3) is movable, the bottom of said plate having, three upper running-bearing surfaces (4, 5, 6) facing downwards that are opposite from the lower running-bearing surfaces (7, 8, 9) and that are electrically conductively connected to each other and electrically insulated relative to the upper plate (3), as well as three upper magnets (4a, 5a, 6a) arranged above the upper running-bearing surfaces (4, 5, 6), whereby each of the upper magnets (4a, 5a, 6a) is oriented in such a way that it attracts each corresponding opposite magnet of the lower magnets (7a, 8a, 9a), **in that**, furthermore, a centered cylindrical shaft (13) projecting downwards at a right angle is attached to the upper plate (3), said shaft (13) extending through the bore (14) of the lower plate (2) without making contact and protrudes from the housing (18, 19) at the bottom of the lower plate (2), whereby the movement of the movable plate (3) in parallel and perpendicular relative to the stationary lower plate (2) is limited by the housing (18, 19), and whereby moreover, the sensor is part of an apparatus for measuring the thickness or height of a test specimen (43) and that is powered by a linear drive (29) with an electromotor having a position sensor (incremental transducer) or a stepping motor and a threaded spindle, and the measured value can be determined on the basis of the rotation of the stepping motor with the threaded spindle when one of the current bridges (20, 21, 22) is interrupted, thus triggering a switching signal.

12. An apparatus for measuring the thickness or height of a test specimen (43) such as tablets or pills, having a measuring table (35) and a height-adjustable shaft (13), **characterized in that** a sensor according to Claim 1 or 11 is positioned at the end of the shaft (13) facing the measuring table.

13. The apparatus according to Claim 12, **characterized in that** the sensor is part of an apparatus powered by a linear drive (29) with an electric motor having a position sensor (incremental transducer) or a stepping motor and a threaded spindle, said apparatus serving to measure the thickness or height of a test specimen (43), whereby the measured value is determined on the basis of the rotation of the stepping motor with the threaded spindle when one of the current bridges (20, 21, 22) is interrupted, thus triggering a switching signal.

14. The apparatus according to Claim 12 or 13, **characterized in that** the free end of the shaft (13) has a measuring foot (42) that is attached to the shaft (13) by means of a pivoting bearing so as to pivot, by means of which said measuring foot (42) can be oriented plane-parallel to the measuring table (35).

15. The apparatus according to Claim 13 or 14, **characterized in that** the sensor is connected to the crosshead (40) by means of a bearing that can pivot in the loose state and that is height-adjustable and by means of which the sensor in the loose state is pulled in the direction of the crosshead by spring force.

## Revendications

1. Capteur électrique destiné à la reconnaissance d'un couplage par friction mécanique pour la conversion de celui-ci en un signal de commutation électrique, comprenant deux plaques (2, 3) disposées parallèlement l'une au-dessus de l'autre, une pluralité d'aimants (4a, 5a, 6a, 7a, 8a, 9a) avec de premières surfaces d'appui de roulement électroconductrices (4, 5, 6, 7, 8, 9) étant disposées sur au moins l'une des plaques (2, 3) et, faisant face aux premières surfaces d'appui de roulement (4, 5, 6, 7, 8, 9) et attirées par les champs magnétiques, de secondes surfaces d'appui de roulement également électroconductrices (4, 5, 6, 7, 8, 9) étant disposées sur l'autre plaque (2, 3), et, entre les premières et les deuxièmes surfaces d'appui de roulement (4, 5, 6, 7, 8, 9) se trouvent des billes mobiles magnétoconductrices et électroconductrices (10, 11, 12), lesquelles sont attirées par le champ magnétique respectif de l'aimant (4a, 5a, 6a, 7a, 8a, 9a), lequel champ magnétique cherche à faire rouler les billes (10, 11, 12) dans le centre des lignes de force magnétiques qui sortent des surfaces d'appui de roulement (4, 5, 6, 7, 8, 9) ou qui entrent dans celles-ci, et les champs magnétiques avec les billes (10, 11, 12) entre les surfaces d'appui de roulement (4, 5, 6, 7, 8, 9) forment un palier magnétique à centrage automatique, et les deux plaques sont déplaçables parallèlement et verticalement l'une par rapport à l'autre, les billes (10, 11, 12) constituant chacune, avec les premières et les secondes surfaces d'appui de roulement (4, 5, 6, 7, 8, 9) qui leur sont respectivement assignées, un pont électrique au moyen du couplage par friction mécanique, et, en présence d'une composante de force agissant verticalement sur l'une des plaques (2, 3) et de ce fait du soulèvement intrinsèque de l'une des plaques (2, 3) par rapport à l'autre plaque (2, 3), en raison de la suppression du couplage par friction mécanique et de l'interruption du contact qui lui est liée, un signal de commutation électrique est déclenchable au moins dans l'un des ponts électriques.

2. Capteur selon la revendication 1, **caractérisé en ce que**
les premières surfaces d'appui de roulement (4, 5, 6, 7, 8, 9) sont les surfaces des premiers aimants (4a, 5a, 6a, 7a, 8a, 9a).

3. Capteur selon la revendication 1, **caractérisé en ce que**
les deuxièmes surfaces d'appui de roulement (4, 5, 6, 7, 8, 9) sont formées par les surfaces de deuxièmes aimants (4a, 5a, 6a, 7a, 8a, 9a), les premiers et les deuxièmes aimants se faisant face.

4. Capteur selon la revendication 1, **caractérisé en ce que**
le dispositif de mesure destiné à déterminer le couplage par friction est un dispositif destiné à la mesure d'une capacité électrique ou d'une inductance ou un dispositif destiné à la mesure de l'intensité du champ magnétique à l'aide d'un capteur à effet Hall.

5. Capteur selon la revendication 1, **caractérisé en ce que**
les aimants (4a, 5a, 6a, 7a, 8a, 9a) sont des aimants permanents ou des électroaimants.

6. Capteur selon la revendication 1, **caractérisé en ce que**
les mouvements relatifs des deux plaques (2, 3) l'une par rapport à l'autre dans les trois dimensions dans l'espace, ainsi que l'inclinaison des deux plaques (2,3) l'une par rapport à l'autre sont limités par un boîtier (18, 19) fixé sur l'une des plaques (2, 3).

7. Capteur selon la revendication 1, **caractérisé en ce que**
les mouvements de rotation des deux plaques (2, 3) en sens opposé autour de l'axe des plaques sont limités par une tige fixée sur l'une des plaques (2, 3), laquelle tige a prise dans la réserve (3a) de l'autre plaque (2, 3).

8. Capteur selon la revendication 1, **caractérisé en ce que**
les premières surfaces d'appui de roulement (4, 5, 6, 7, 8, 9) ou les deuxièmes surfaces d'appui de roulement (4, 5, 6, 7, 8, 9) sont reliées entre elles électriquement et que au moins deux des ponts électriques (20, 21, 22) sont couplés en série chacun avec une résistance électrique (23, 24) ou un condensateur ou chacun avec une inductance.

9. Capteur selon les revendications 1 et 2, **caractérisé en ce que**
les ponts électriques (20, 21, 22) sont couplés en série.

10. Capteur selon la revendication 1, **caractérisé en ce que**
le capteur est une partie d'un appareillage destiné à la mesure de l'épaisseur ou de la hauteur d'une éprouvette (43) qui est positionnée sur une table de mesure (35).

11. Capteur selon la revendication 1, **caractérisé en ce que**
les deux plaques (2, 3) sont entourées par un boîtier (18, 19), la plaque inférieure (2) étant disposée de façon fixe dans le boîtier (18, 19) ou étant une partie du boîtier (18, 19) et présentant un alésage centré (14), ainsi que sur sa face supérieure trois surfaces d'appui de roulement inférieures (7, 8, 9) électroconductrices et électriquement isolées entre elles et vis-à-vis de la plaque inférieure (2) et trois aimants inférieurs (7a, 8a, 9a) disposés sur la plaque inférieure (2) en dessous des surfaces d'appui de roulement inférieures (7, 8, 9), la plaque supérieure (3) étant mobile, laquelle présente sur sa face inférieure trois surfaces d'appui de roulement (4, 5, 6) tournées vers le bas faisant face aux surfaces d'appui de roulement inférieures (7, 8, 9) reliées électriquement entre elles et isolées électriquement vis-à-vis de la plaque supérieure (3) et trois aimants supérieurs (4a, 5a, 6a) disposés au-dessus des surfaces d'appui de roulement (4, 5, 6), chacun des aimants supérieurs (4a, 5a, 6a) étant orienté de sorte qu'il attire l'aimant des aimants inférieurs (7a, 8a, 9a) qui lui fait respectivement face, **en ce que** de surcroît une tige cylindrique centrée (13) faisant saillie à angle droit vers le bas est disposée sur la plaque supérieure (3), laquelle tige passe à travers l'alésage (14) de la plaque inférieure (2) sans entrer en contact avec ce dernier et dépasse le côté inférieur de la plaque inférieure (2) en dehors du boîtier (18, 19), le mouvement de la plaque mobile (3) parallèlement et verticalement par rapport à la plaque inférieure fixe (2) étant limité par le boîtier (18, 19) et le capteur étant de surcroît une partie d'un appareillage destiné à la mesure de l'épaisseur ou de la hauteur d'une éprouvette (43) entraîné par un entraînement linéaire (29) avec un moteur électrique avec capteur de position (transmetteur incrémental) ou par un moteur pas-à-pas et une broche filetée, et la valeur mesurée lors de l'interruption de l'un des ponts électriques (20, 21, 22) et de ce fait du déclenchement d'un signal de commutation est déterminable à partir du tour du moteur pas-à-pas avec broche filetée.

12. Appareillage destiné à la mesure de l'épaisseur ou de la hauteur d'une éprouvette (43), telle que des comprimés ou des pilules, comportant une table de mesure (35) et une tige réglable en hauteur (13), **caractérisé en ce que** sur l'extrémité de la tige (13) orientée vers la table de mesure est positionné un capteur selon la revendication 1 ou 11.

13. Appareillage selon la revendication 12, **caractérisé en ce que** le capteur est une partie d'un appareillage destiné à la mesure de l'épaisseur ou de la hauteur de l'éprouvette (43) entraîné par un entraînement linéaire (29) avec un moteur électrique avec capteur de position (transmetteur incrémental) ou par un moteur pas-à-pas et une broche filetée, la valeur mesurée lors de l'interruption de l'un des ponts électriques (20, 21, 22) et de ce fait du déclenchement d'un signal de commutation étant déterminée à partir du tour du moteur pas-à-pas avec broche filetée.

14. Appareillage selon l'une des revendications 12 ou 13, **caractérisé en ce que** la tige (13) présente en son extrémité libre un pied de mesure (42) qui est appliqué sur la tige de façon à pouvoir pivoter au moyen d'un appui articulé, au moyen duquel il peut être orienté en plan parallèle à la table de mesure (35).

15. Appareillage selon l'une des revendications 13 ou 14, **caractérisé en ce que** le capteur est relié avec la traverse (40) au moyen d'un support arrêtable, pivotable et réglable en hauteur lorsqu'il est à l'état libre, par lequel le capteur à l'état libre est tiré par effet de ressort en direction de la traverse.
